# EUROPÄISCHE PATENTSCHRIFT

(11) **EP 1 332 923 B1**
(45) Veröffentlichungstag und Bekanntmachung des Hinweises auf die Patenterteilung: **11.07.2007**
(21) Anmeldenummer: 02027831.3
(22) Anmeldetag: 12.12.2002
(51) Int. Cl.: B60R 11/04

(54) **Einpark- und/oder Rangierhilfeeinrichtung**
Manoeuvring and/or parking aid device for a vehicle
Dispositif d'aide à la manoeuvre et au stationnement d'un véhicule

(30) Priorität: 05.02.2002 DE 10204764; 09.10.2002 DE 10247056
(43) Veröffentlichungstag der Anmeldung: 06.08.2003
(73) Patentinhaber: Donnelly Hohe GmbH & Co. KG, 97903 Collenberg (DE)
(72) Erfinder: Berberich, Wolfgang, 97896 Freudenberg (DE); Kolbe, Barbara, 97877 Wertheim (DE); Seitz, Edwin, 97909 Stadtprozelten (DE); Seitz, Werner, 97903 Collenberg (DE); Weis, Tim, Dr.-Ing., 64625 Bensheim (DE)
(74) Vertreter: Böck, Bernhard

(56) Entgegenhaltungen:
- EP-A- 0 962 359
- DE-A- 10 037 128
- DE-A- 10 037 129
- PATENT ABSTRACTS OF JAPAN Bd. 2000, Nr. 03, 30. März 2000 (2000-03-30) & JP 11 334471 A (MITSUBISHI ELECTRIC CORP), 7. Dezember 1999 (1999-12-07)

## Beschreibung

Die Erfindung betrifft eine Einpark- und/oder Rangierhilfeeinrichtung für Pkws oder Lkws nach dem Oberbegriff des Anspruchs 1.

Um ein sicheres Einparken bzw. Rangieren gewährleisten zu können, ist die Beobachtung beispielsweise des rückwärtigen Raumes hinter einem Fahrzeug unerlässlich. Sind allerdings im Fahrzeug nur Rückspiegel vorhanden, entstehen aufgrund des unzureichenden Beobachtungsbereichs der Spiegel im rückwärtigen Raum sogenannte tote Winkel, die vom Fahrer nicht eingesehen werden können.

Durch den Einsatz von Bilderfassungseinheiten, beispielsweise Videokameras, deren Bilder an einer im Fahrzeuginnenraum angeordneten Bilddarstellungseinheit angezeigt werden, können auch die mit dem konventionellen Spiegel nicht einsehbaren Bereiche für den Fahrer so angezeigt werden, dass er einen im Wesentlichen vollständigen Überblick über einen grundsätzlich beliebigen Beobachtungsbereich hat. Da werden entweder die von der Bilderfassungseinheit aufgenommenen Bildinformationen unbearbeitet weitergeleitet und beispielsweise als einfaches Fernsehbild angezeigt. Es sind jedoch auch Systeme zur Bearbeitung der von der Bilderfassungseinheit aufgenommenen Bildinformationen bekannt, durch die es möglich ist, dem Fahrer das Fahrzeug mit der Umgebung aus der Vogelperspektive als schematisiertes Bild anzuzeigen.

Aus der DE 100 37 128 A1 und der DE 100 37 129 A1 sind Einpark- und Rangierhilfeeinrichtungen bekannt. Bei den dort beschriebenen Systemen ist eine Videokamera am Fahrzeugheck bzw. sind vier Videokameras an allen vier Ecken des Fahrzeuges angeordnet. Die Befestigung der Videokameras erfolgt dabei jeweils außerhalb der Fahrzeuge, damit der entsprechend vorgegebene Beobachtungsbereich ohne Weiteres von der Videokamera aufgenommen werden kann.

In der gattungsbildenden JP 113 34 471 A ist eine Fahrzeugkamera beschrieben, die drehbar in einem Schutzgehäuse gelagert ist. Zum Antrieb der drehbar gelagerten Kamera ist ein Antriebsmechanismus mit verschiedenen Antriebswellen vorgesehen.

Aufgabe der vorliegenden Erfindung ist es, eine neue Einpark- und/oder Rangierhilfeeinrichtung vorzuschlagen.

Diese Aufgabe wird durch eine Einpark- und/oder Rangierhilfeeinrichtung nach dem Oberbegriff des Anspruchs 1 gelöst.

Vorteilhafte Ausführungsformen der Erfindung sind Gegenstand der Unteransprüche.

Gattungsgemäß wird die Bilderfassungseinheit von außen im Wesentlichen unzugänglich hinter einem Schutzelement angeordnet. Dieses Schutzelement kann beispielsweise von Teilen der Fahrzeugkarosserie, insbesondere vom Kofferraumdeckel, gebildet werden, so dass für das Schutzelement selbst kein zusätzlicher Aufwand erforderlich ist. Im Schutzelement wird Gattungsgemäß eine Ausnehmung vorgesehen. Diese Ausnehmung dient dazu, dass der vorgegebene Beobachtungsbereich mit der Bilderfassungseinheit aufgenommen werden kann.

Die Bilderfassungseinheit ist hinter dem Schutzelement verstellbar gelagert und kann mittels einer Antriebseinrichtung zwischen der Ruheposition und zumindest einer davon unterschiedlichen Betriebsposition verstellt werden. Dadurch ist es insbesondere möglich, dass die Bilderfassungseinheit beim Anfahren der Betriebsposition so weit nach vorne gefahren wird, dass zumindest Teile der Bilderfassungseinheit die Ausnehmung ein Stück weit durchgreifen. Dadurch wird es beispielsweise möglich, das Kameraobjektiv einer Videokamera so weit nach vorne zu fahren, dass der Blickwinkel nicht mehr vom Schutzelement eingeschränkt wird und damit abhängig von den Objektiveigenschaften, beispielsweise bei Verwendung eines Weitwinkelobjektivs, sehr große Beobachtungsbereiche aufgenommen werden können.

Die Antriebseinrichtung zur Erstellung der Bilderfassungseinheit ist in der Art einer Bimetalleinheit ausgebildet sein.

Um die Verschmutzung der Bilderfassungseinheit zuverlässig ausschließen zu können, ist es besonders vorteilhaft, wenn die Ausnehmung im Schutzelement mit einem transparenten Abdeckelement verschlossen ist. Dadurch wird es insbesondere möglich, einen nach außen hin im Wesentlichen abgeschlossenen Raum zu bilden, in dem dann die Bilderfassungseinheit angeordnet ist. Soweit das Abdeckelement hinter der Ausnehmung befestigt ist, kann die Bilderfassungseinheit in diesem Fall nicht durch die Ausnehmung hindurch verstellt werden.

Durch Temperaturunterschiede und entsprechend hohe Luftfeuchtigkeit kann sich ein Kondenswasserfilm auf dem Abdeckelement bilden, durch den die Transparenzeigenschaften beeinträchtigt werden. Es ist deshalb besonders vorteilhaft, wenn das Abdeckelement beheizt werden kann, so dass, entsprechend der Funktion von beheizbaren Rückscheiben, ein Abtauen ermöglicht wird.

Diese Funktion kann in einfacher Weise beispielsweise dadurch gewährleistet werden, dass das Abdeckelement in der Art einer leitfähig beschichteten Glasscheibe ausgebildet ist. Durch Anlegen einer geeigneten Versorgungsspannung an derartig beschichteten Glasscheiben wird eine Beheizung der Scheibenoberfläche ermöglicht.

Im Bereich des Automobilbaus, insbesondere bei höherklassigen Fahrzeugen, ist die optische Gestaltung des Fahrzeuges von herausragender Bedeutung. Wird das gattungsgemäße Schutzelement zum Schutz der Bilderfassungseinheit beispielsweise von einem Teil der Fahrzeugkarosserie des Fahrzeuges gebildet, so kann eine Beeinträchtigung der Optik der Karosserie durch dieses zusätzliche Funktionselement vorkommen. Da die Bilderfassungseinheit nur in ganz bestimmten Fahrsituationen zum Einsatz kommt und in den meisten Fahrsituationen außer Funktion ist, wird zur Verbesserung der Fahrzeugoptik für diese Fälle vorgeschlagen, auf der Außenseite des Schutzelements einen verstellbar gelagerten Deckel vorzusehen, der mittels der Bimetalleinheit zwischen einer Ruheposition und einer davon unterschiedlichen Betriebsposition verstellt werden kann. In der Ruheposition wird dabei die Ausnehmung im Schutzelement durch den Deckel im Wesentlichen vollständig abgedeckt, so dass die Ausnehmung mit der dahinterliegenden Bilderfassungseinheit von außen nicht mehr sichtbar ist. Erst durch Verfahren des Deckels in die Betriebsposition wird die Ausnehmung freigegeben, so dass entweder Bildaufnahmen durch die Ausnehmung hindurch möglich sind bzw. die Bilderfassungseinheit durch die Ausnehmung hindurch nach außen verstellt werden kann. Durch den Deckel kann zudem ein zusätzlicher Schutz der Bilderfassungseinheit vor Verschmutzung und Beschädigungen gewährleistet werden.

Die Bilderfassungseinheit durch die Ausnehmung hindurch nach vorne gefahren werden, so ist zur Herstellung der Betriebsbereitschaft der Einpark- und/oder Rangierhilfeeinrichtung jeweils kombiniert das Öffnen des Deckels und das nach vorne Fahren der Kamera erforderlich. Es ist deshalb besonders vorteilhaft, bei derart ausgebildeten Systemen zum Antrieb sowohl der Bilderfassungseinheit als auch des Deckels lediglich eine gemeinsame Bimetalleinheit vorzusehen. Zwischen der Bimetalleinheit und dem Deckel einerseits bzw. der Bilderfassungseinheit andererseits werden dann Übertragungselemente, beispielsweise Schubstangen oder Übersetzungsgetriebe vorgesehen, so dass bei Ansteuerung der Antriebseinrichtung gleichzeitig der Deckel geöffnet und die Bilderfassungseinheit nach vorne gefahren wird.

Ist der Deckel entsprechend einer bevorzugten Ausführungsform in der Art eines Herstelleremblems, eines Typenschildes oder Ähnlichem ausgebildet, so unterscheiden sich die Optik eines Fahrzeuges, das mit einer hier in Rede stehenden Einpark- und/oder Rangierhilfeeinrichtung ausgestattet ist, und eines Fahrzeuges ohne eine solche Einpark- und/oder Rangierhilfeeinrichtung überhaupt nicht. Erst bei Aktivierung der Einpark- und/oder Rangierhilfeeinrichtung und der damit verbundenen Öffnung des Deckels wird die Ausnehmung in dem Schutzelement mit der dahinterliegenden Bilderfassungseinheit sichtbar.

Zur Verstellung des Deckels aus der Ruheposition in die geöffnete Betriebsposition werden zwei unterschiedliche Bewegungskinematiken vorgeschlagen. Nach der ersten Bewegungskinematik wird der Deckel um eine Schwenkachse zwischen der Ruheposition und der Betriebsposition verschwenkt. Das bedeutet, dass der Deckel in der geöffneten Betriebsposition vom Schutzelement um den entsprechenden Schwenkwinkel absteht und lediglich im Bereich der Schwenkachse mit dem Schutzelement Verbindung hat.

Nach der zweiten Bewegungskinematik ist der Deckel in einer Drehachse drehbar gelagert, die gegenüber der Mitte des Deckels exzentrisch angeordnet ist und sich im Wesentlichen senkrecht zur Körperebene des Deckels erstreckt. Bei der Verstellung des Deckels zwischen Ruheposition und geöffneter Betriebsposition wird der Deckel um diese Drehachse verdreht, wobei der Deckel jeweils in seiner Körperebene bewegt wird und somit in allen Betriebssituationen mit seiner Innenseite auf der Außenseite des Schutzelements mittelbar oder unmittelbar anliegt. Im Ergebnis wird also beim Öffnen des Deckels eine parallel zur Außenseite des Schutzelements gerichtete Wischbewegung vom Deckel ausgeführt. Sind auf der zur Bilderfassungseinheit gerichteten Seite des Deckels Reinigungselemente vorgesehen, kann durch die entsprechende Wischbewegung beim Öffnen bzw. Schließen des Deckels eine Reinigung beispielsweise des Kameraobjektivs oder eines sonstigen transparenten Abdeckelements bewirkt werden.

Um das Eindringen von Schmutz in den Bereich unterhalb des geschlossenen Deckels zuverlässig ausschließen zu können, ist es besonders vorteilhaft, wenn auf der zur Bilderfassungseinheit gerichteten Seite des Deckels Abdichtelemente, beispielsweise Dichtlippen, vorgesehen sind.

Weiter ist es besonders vorteilhaft, wenn der Deckel in der Ruheposition mit einem Riegelelement verriegelt werden kann. Derartige Riegelelemente sind beispielsweise auch zum Verriegeln der Tankklappe bekannt. Durch Verriegelung des Deckels in der Ruheposition ist ein ungewolltes, insbesondere gewaltsames, Öffnen des Deckels bei abgestelltem Fahrzeug zuverlässig ausgeschlossen, so dass eine Beschädigung des Verstellmechanismus bzw. des dahinterliegenden Kamerasystems verhindert werden kann.

Zur Aktivierung der Einpark- und/oder Rangierhilfeeinrichtung kann im Innenraum des Fahrzeuges ein separates Schaltelement vorgesehen werden, bei dessen Betätigung die Bilderfassungseinheit und/oder der Deckel zwischen Ruheposition und Betriebsposition und umgekehrt verstellt werden. Somit hat der Fahrer durch Betätigung des entsprechenden Schaltelements jederzeit die Möglichkeit, mittels der Einpark- und/oder Rangierhilfeeinrichtung den Beobachtungsbereich außerhalb des Fahrzeuges an der Bilddarstellungseinheit anzeigen zu lassen. Außerdem ist es auch möglich, die Einpark- und/oder Rangierhilfeeinrichtung automatisch durch Einlegen des Rückwärtsganges zu aktivieren, so dass dem Fahrer automatisch beim Rückwärtsfahren der Beobachtungsbereich hinter dem Fahrzeugheck an der Bilddarstellungseinheit angezeigt wird.

Damit die Einpark- und/oder Rangierhilfeeinrichtung auch in Dunkelheit effektiv eingesetzt werden kann, ist es besonders vorteilhaft, wenn der Bilderfassungseinheit eine Beleuchtungseinrichtung zugeordnet ist. Entweder bei jeder Aktivierung der Bilderfassungseinheit oder erst bei Unterschreiten einer vorgegebenen Helligkeitsstufe kann dann der Beobachtungsbereich außerhalb des Fahrzeuges mit der Beleuchtungseinrichtung ausgeleuchtet werden, so dass ausreichend konturscharfe Bildaufnahmen möglich sind.

Grundsätzlich kann das gattungsgemäße Schutzelement von jedem beliebigen Bauteil am Fahrzeug gebildet werden, das eine ausreichende mechanische Festigkeit zum Schutz der Bilderfassungseinrichtung bietet. Besonders vorteilhaft ist es, wenn das Schutzelement von einem Teil der Fahrzeugkarosserie, insbesondere vom Kofferraumdeckel, gebildet wird, da die Bauteile der Fahrzeugkarosserie ohnehin bei der Herstellung des Fahrzeuges vorzusehen sind und außerdem aufgrund ihrer Funktion als Fahrzeugkarosserie ohne Weiteres eine ausreichende mechanische Stabilität bieten. Die Anordnung im Kofferraumdeckel ist besonders vorteilhaft, da dadurch der Bereich hinter dem Fahrzeugheck im Wesentlichen vollständig mit der Bilderfassungseinheit aufgenommen werden kann. Außerdem sind am Kofferraumdeckel häufig Typenschilder bzw. Herstelleremblems vorgesehen, so dass die Abdeckung der Ausnehmung für die Bilderfassungseinheit in optisch ansprechender Weise ermöglicht wird.

Ist im Fahrzeug ein Display zur Anzeige der Daten bzw. Bilder eines Navigationssystems vorgesehen, so ist es besonders vorteilhaft, wenn die Bilddaten der Einpark- und/oder Rangierhilfeeinrichtung an diesem Display angezeigt werden. Im Ergebnis kann dadurch eine separate Bilddarstellungseinheit für die Einpark- und/oder Rangierhilfeeinrichtung eingespart werden.

Ein Teil einer Einpark- und/oder Rangierhilfeeinrichtung ist in den Zeichnungen beispielhaft dargestellt und wird nachfolgend näher erläutert.

Es zeigen:
- **Fig. 1**: eine erste Ausführungsform einer Bilderfassungseinheit zur Verwendung für eine Einpark- oder Rangierhilfeeinrichtung in perspektivischer Ansicht;
- **Fig. 2**: die Bilderfassungseinheit gemäß **Fig. 1** in seitlicher Ansicht;
- **Fig. 3**: eine zweite Ausführungsform einer Bilderfassungseinheit zur Verwendung für eine Einpark- oder Rangierhilfeeinrichtung in Ansicht von vorne;
- **Fig. 4**: die Bilderfassungseinheit gemäß **Fig. 3** in perspektivischer seitlicher Ansicht;
- **Fig. 5**: die Bilderfassungseinheit gemäß **Fig. 4** im geöffneten Zustand in seitlicher Ansicht;
- **Fig. 6**: die Bilderfassungseinheit gemäß **Fig. 5** im geschlossenen Zustand in seitlicher Ansicht;
- **Fig. 7**: eine zur Befestigung einer Bilderfassungseinheit geeignete Justiereinrichtung in Ansicht von oben;
- **Fig. 8**: die Justiereinrichtung gemäß **Fig. 7** im Querschnitt entlang der Schnittlinie I - I.

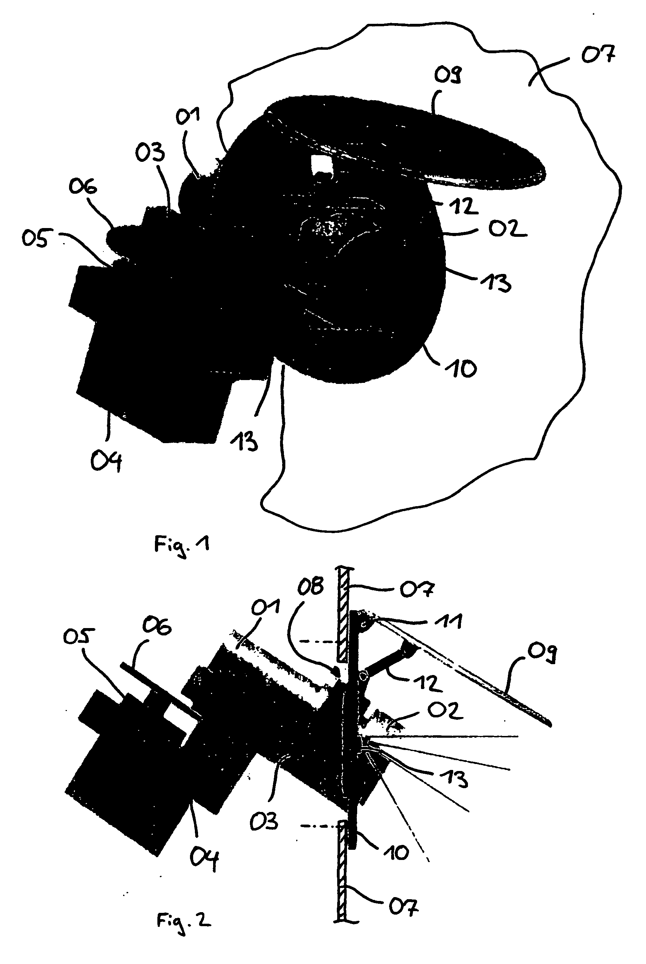

Die in **Fig. 1** schematisch dargestellte Bilderfassungseinrichtung 01 ist als elektronische Videokamera mit CCD-Chip ausgebildet und weist ein lediglich schematisch dargestelltes Weitwinkelobjektiv 02 auf. Die Bilderfassungseinheit 01 ist auf einem Schlitten 03 montiert, der auf einem Lagerbock 04 linear verschiebbar gelagert ist. Der Lagerbock 04 wird im Inneren eines Fahrzeugkofferraumes an in Fig. 1 nicht dargestellten Befestigungselementen befestigt.

Zur Verstellung der Bilderfassungseinheit 01 durch Verschieben des Schlittens 03 ist auf der Oberseite des Lagerbocks 04 ein elektrischer Getriebemotor 05 mit Antriebsscheibe 06 vorgesehen. Die Antriebsscheibe 06 steht mit dem Schlitten 01 im Eingriff, so dass durch eine entsprechende Antriebsbewegung des Getriebemotors 05 der Schlitten 03 nach vorne bzw. nach hinten geschoben bzw. gezogen werden kann.

Zum Schutz der Bilderfassungseinheit 01 wird diese, wie in **Fig. 2** dargestellt, hinter einem Schutzelement 07, das vom Blech des Kofferraumdeckels gebildet wird, angeordnet. Um Aufnahmen mit der Bilderfassungseinheit 01 zu ermöglichen, ist in dem Schutzelement 07 eine Ausnehmung 08 vorgesehen.

Um das Eindringen von Schmutz und Feuchtigkeit im nicht aktivierten Zustand der Bilderfassungseinheit verhindern zu können, wird auf der Außenseite des Schutzelements 07 ein Deckel 09 vorgesehen, der an einer Befestigungsplatte 10 um eine Schwenkachse 11 schwenkbar gelagert ist. Die Befestigungsplatte 10 ihrerseits ist im Bereich der Ausnehmung 08 von außen auf das Schutzelement 07 aufgesetzt beispielsweise mit Schrauben oder durch eine Klebeschicht befestigt. Außerdem ist der Deckel 09 durch eine Schubstange 12 mit der Bilderfassungseinheit 01 verbunden.

**Fig. 2** stellt die Bilderfassungseinheit 01 im aktivierten Zustand dar. In diesem Betriebszustand durchgreift die Bilderfassungseinheit 01 mit dem Objektiv 02 die Ausnehmung 08 im Schutzelement 07, so dass der außerhalb des Fahrzeuges liegende Beobachtungsbereich optimal aufgenommen werden kann. Zur Ausleuchtung des Beobachtungsbereiches bei nicht ausreichenden Beleuchtungsverhältnissen sind in der Befestigungsplatte zwei Beleuchtungseinrichtungen 13 vorgesehen, mit denen der Bereich hinter dem Fahrzeugheck ausgeleuchtet werden kann.

Wird die Bilderfassungseinheit zur Aufnahme von Bildern nicht mehr benötigt, so wird der Getriebemotor 05 derart angesteuert, dass der Schlitten 03 zusammen mit der Bilderfassungseinheit 01 so weit zurückgezogen wird, dass das Objektiv 02 nicht mehr über die Ausnehmung 08 nach außen übersteht. Durch die entsprechende Stellbewegung der Bilderfassungseinheit 01 wird außerdem die Schubstange 12 nach innen gezogen, so dass sich der Deckel 09 über der Ausnehmung 08 schließt. In der hintersten Position des Schlittens 03 liegt der Deckel 09 dann gerade dicht auf der Befestigungsplatte 10 an, so dass die Ausnehmung 08 nach außen hin abgedichtet ist.

Bei Aktivierung der Bilderfassungseinheit 01 wird der Schlitten 03 in umgekehrter Richtung wieder nach vorne gefahren, wobei sich der Deckel 09 wiederum öffnet und das Objektiv 02 ein Stück weit nach außen gefahren wird.

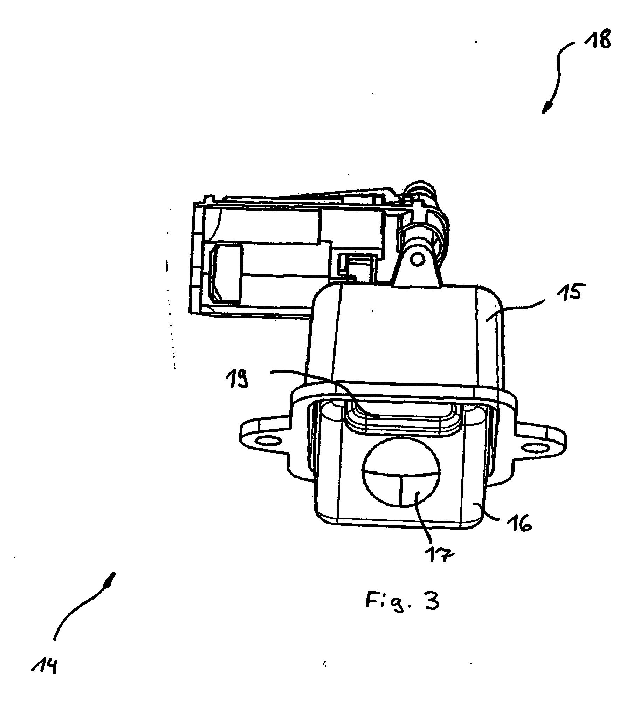

In **Fig. 3** bis **Fig. 6** ist eine zweite Ausführungsform 14 einer Bilderfassungseinheit zur Verwendung für eine Einpark- oder Rangierhilfeeinrichtung dargestellt. Die Bilderfassungseinheit 14 weist eine im Fahrzeug feststehend montierbare Kameraaufnahme 15 auf, die beispielsweise auf der Innenseite eines Kofferraumdeckels hinter einer geeigneten Ausnehmung im Kofferraumdeckel befestigt wird. Bei der Bilderfassungseinheit 14 ist also eine in der Kameraaufnahme 15 befestigte Kamera 16 feststehend im Fahrzeug montiert. Zum Schutz der Kamera 16 mit der Kameralinse 17 ist ein mit einer Antriebseinheit 18 fernverstellbarer Deckel 19 vorgesehen.

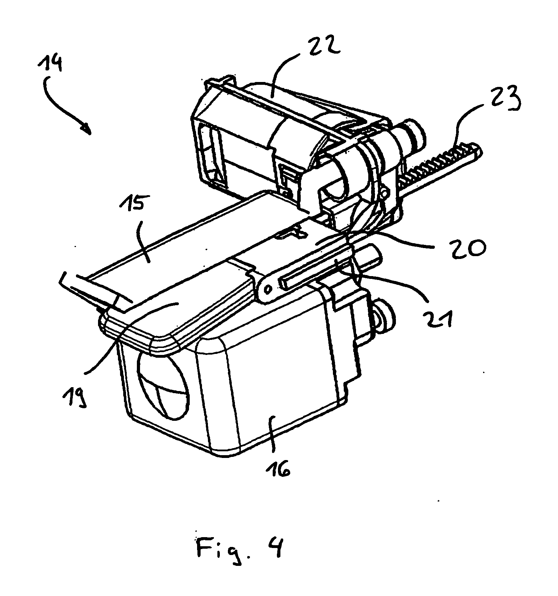

Wie insbesondere aus **Fig. 4** ersichtlich, ist der Deckel 19 an einem Schlitten 20 schwenkbar gelagert. Zur besseren Erkennbarkeit des Schlittens 20 ist die Kameraaufnahme 15 in **Fig. 4** aufgebrochen dargestellt. Der Deckel 20 ist mit Führungsleisten 21 in der Kameraaufnahme 15 verschiebbar gelagert. Zwischen Deckel 19 und Schlitten 20 ist ein nicht dargestelltes Federelement vorgesehen, das den Deckel 19 in die geschlossene Position nach unten drückt. Zu Reinigungszwecken kann der Deckel 20 dadurch auch in der geschlossenen Position durch Überwindung der Federkraft von Hand geöffnet werden.

Die Antriebseinheit 18 besteht im Wesentlichen aus einem Elektromotor 22, der über ein Getriebe auf eine Zahnstange 23 wirkt. Die Zahnstange 23 ist mit dem Schlitten 20 verbunden, so dass im Ergebnis durch Antrieb des Elektromotors 22 der Schlitten 20 linear verschoben werden kann.

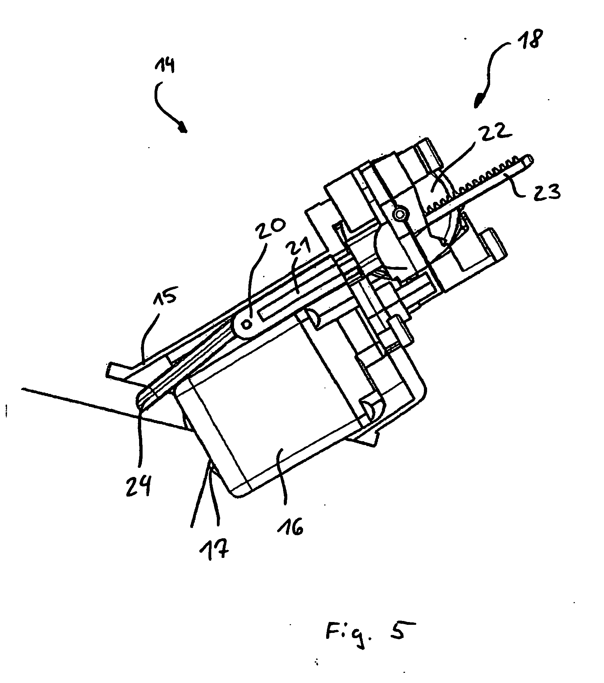

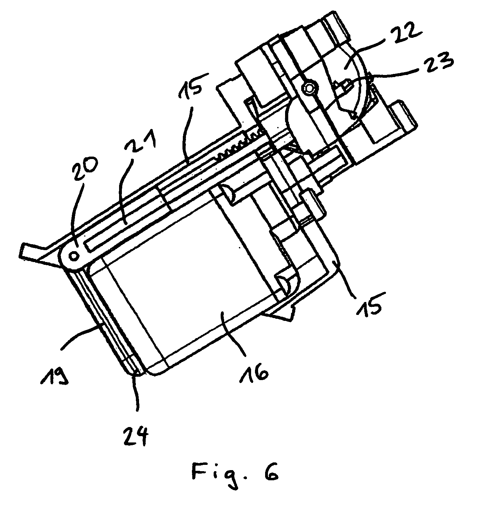

Die Funktion der Bilderfassungseinheit 14 wird aus **Fig. 5** und **Fig. 6** deutlich. Beim Aktivieren der Bilderfassungseinheit 14 wird die Antriebseinheit 18 gestartet und zieht den Schlitten 20 mittels der Zahnstange 23 nach innen. Der Deckel 19 wird dabei durch die Anlage an der Oberkante der Kamera entgegen der Federkraft nach oben geschwenkt und gibt die Kameralinse 17 frei, so dass das Sichtfeld für die Kamera 16 freigegeben ist. Die Abschaltung der Antriebseinheit 18 in der Endposition kann über Endschalter oder Abschaltung bei Erkennung eines Stromanstieges erfolgen. In der Endposition des Deckels 19 ragt die Vorderkante 24 ein Stück weit über und bildet dadurch einen Schutz der Kameralinse gegen herabfallende Wassertropfen.

Kameras weisen aufgrund der Fertigungsungenauigkeiten Toleranzen im Sichtfeld auf. Diese können bis zu Werten über +-2° betragen. Auch die meisten Fahrzeuge haben Fertigungstoleranzen bis zu +-2°. Möchte man nun eine solche Kamera z.B. als Bilderfassungseinheit verwenden, so benötigt man eine Justageeinrichtung, um immer die gleiche Sicht gewährleisten zu können. Diese Justagemöglichkeit muss in der Lage sein, die Kamera in einem Bereich von mindestens +-4° justieren zu können. Zudem muss diese Justageeinrichtung eine sehr genaue Justierung zulassen und sehr preiswert sein.

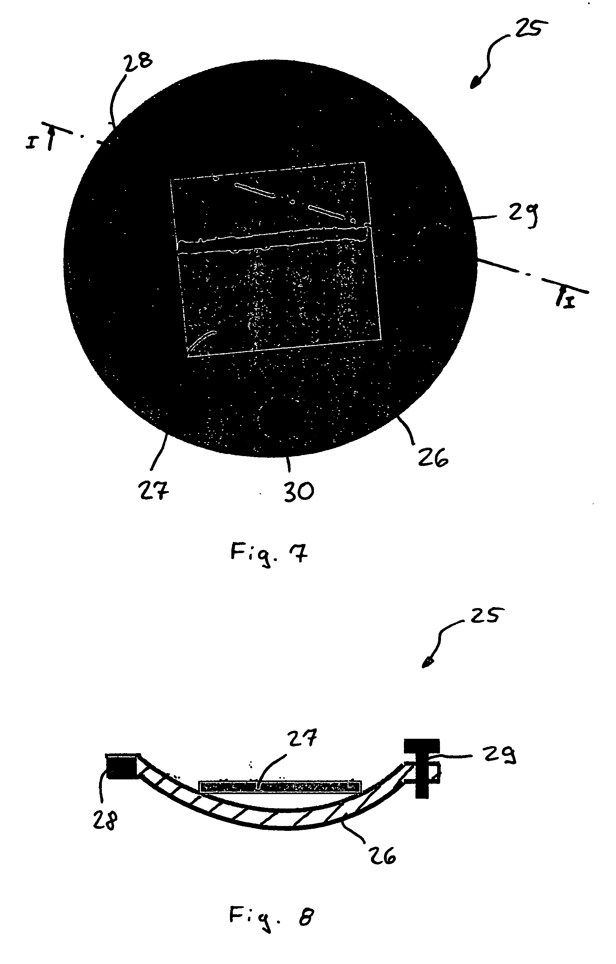

In **Fig. 7** ist eine zur Befestigung einer Bilderfassungseinheit geeignete Justiereinrichtung 25 in Ansicht von oben dargestellt. Eine solche Justiereinrichtung 25 kann beispielsweise zwischen der Kameraaufnahme 15 und der Kamera 16 angeordnet werden, um die Kamera 16 nach Montage der Kameraaufnahme 15 am Fahrzeug lagerichtig justieren zu können.

An der Justiereinrichtung 25 ist eine Grundplatte 26 und eine daran befestigte Anbringungseinrichtung 27 vorgesehen. Die Anbringungseinrichtung 27 dient der Befestigung einer Kamera an der Justiereinrichtung 25. Die Grundplatte 27 kann beispielsweise in drei Punkten an einer geeigneten Trägerstruktur fixiert werden. In einem Befestigungspunkt ist ein Deformationselement 28 vorgesehen, das bei Justierung der Grundplatte 27 verformbar ist. In den beiden anderen Befestigungspunkten sind zwei Verstellschrauben 29 und 30 vorgesehen, um die Grundplatte zusammen mit der daran befestigten Kamera vertikal und horizontal justieren zu können. Durch Drehen der Verstellschrauben 29 und 30 kann die Kamera, die an der Justiereinrichtung 25 befestigt ist, in horizontaler und vertikaler Richtung geschwenkt werden.

## Patentansprüche

1. Einpark- und/oder Rangierhilfeeinrichtung für einen Pkw oder Lkw mit einer Bilderfassungseinheit (01), beispielsweise einer Videokamera, und einer Bilddarstellungseinheit, mit der die von der Bilderfassungseinheit (01) aufgenommenen Bildinformationen bearbeitet und/oder unbearbeitet im Fahrzeuginnenraum angezeigt werden können, wobei die Bilderfassungseinheit (01) zumindest in einer Ruheposition von außen im Wesentlichen unzugänglich hinter einem Schutzelement (07) angeordnet ist, wobei im Schutzelement (07) eine der Bilderfassungseinheit (01) zugeordnete Ausnehmung (08) vorgesehen ist, und wobei die Bilderfassungseinheit (01) verstellbar gelagert ist und mittels einer Antriebseinrichtung (05) zwischen der Ruheposition und zumindest einer davon unterschiedlichen Betriebsposition verstellt werden kann ,
**dadurch gekennzeichnet,**
**dass** die Antriebseinrichtung in der Art einer Bimetalleinheit ausgebildet ist.

2. Einrichtung nach Anspruch. 1,
**dadurch gekennzeichnet,**
**dass** die Bilderfassungseinheit (01) auf einem Schlitten (03) angeordnet ist, der relativ zum Schutzelement (07) linear verstellt werden kann.

3. Einrichtung nach Anspruch 1 oder 2,
**dadurch gekennzeichnet,**
**dass** die Bilderfassungseinheit (01) in zumindest einer Betriebsposition die Ausnehmung (08) im Schutzelement (07) zumindest ein Stück weit durchgreift.

4. Einrichtung nach einem der Ansprüche 1 bis 3,
**dadurch gekennzeichnet,**
**dass** die Ausnehmung, insbesondere unter Bildung eines nach außen im Wesentlichen abgeschlossenen Raumes, mit einem transparenten Abdeckelement verschlossen ist.

5. Einrichtung nach Anspruch 4,
**dadurch gekennzeichnet,**
**dass** das Abdeckelement beheizbar ist.

6. Einrichtung nach einem der Ansprüche 1 bis 5,
**dadurch gekennzeichnet,**
**dass** das Abdeckelement in der Art einer, insbesondere leitfähig beschichteten, Glasscheibe ausgebildet ist.

7. Einrichtung nach einem der Ansprüche 1 bis 6,
**dadurch gekennzeichnet,**
**dass** auf der Außenseite des Schutzelements (07) ein verstellbar gelagerter Deckel (09) vorgesehen ist, der mittels der Bimetalleinheit zwischen einer Ruheposition, in der die Ausnehmung (08) im Schutzelement (07) durch den Deckel (09) im Wesentlichen vollständig abgedeckt ist, und zumindest einer davon unterschiedlichen Betriebsposition, in der Bildaufnahmen des außerhalb des Fahrzeuges gelegenen Beobachtungsbereiches mittels der hinter dem Schutzelement angeordneten Bilderfassungseinheit durch die Ausnehmung hindurch möglich sind oder in der die Bilderfassungseinheit (01) die Ausnehmung (08) im Schutzelement (07) zumindest ein Stück weit durchgreifen kann, verstellbar ist.

8. Einrichtung nach Anspruch 7,
**dadurch gekennzeichnet,**
**dass** zum Antrieb der verstellbar gelagerten Bilderfassungseinbeit (01) und des verstellbar gelagerten Deckels (09) eine gemeinsame Bimetalleinheit zum Einsatz kommt, deren Stellbewegungen von Übertragungselementen (06, 12), die den Deckel (09) und die Bilderfassungseinheit (01) gemeinsam oder getrennt voneinander jeweils mit der Bimetalleinheit verbinden, übertragen werden.

9. Einrichtung nach Anspruch 7 oder 8,
**dadurch gekennzeichnet,**
**dass** der Deckel (09) in der Art eines Herstelleremblems oder Typenschildes ausgebildet ist.

10. Einrichtung nach einem der Ansprüche 7 bis 9,
**dadurch gekennzeichnet,**
**dass** der Deckel (09) um eine Schwenkachse (11) zwischen Ruheposition und Betriebsposition verschwenkt werden kann.

11. Einrichtung nach einem der Ansprüche 7 bis 9,
**dadurch gekennzeichnet,**
**dass** der Deckel in seiner Körperebene um eine Drehachse zwischen Ruheposition und Betriebsposition verdreht werden kann, wobei die Drehachse gegenüber der Mitte des Deckels exzentrisch angeordnet ist und im Wesentlichen senkrecht zur Körperebene des Deckels verläuft.

12. Einrichtung nach einem der Ansprüche 7 bis 11,
**dadurch gekennzeichnet,**
**dass** auf der zur Bilderfassungseinheit gerichteten Seite des Deckels Reinigungselemente vorgesehen sind.

13. Einrichtung nach einem der Ansprüche 7 bis 12,
**dadurch gekennzeichnet,**
**dass** auf der zur Bilderfassungseinheit gerichteten Seite des Deckels Abdichtelemente, insbesondere Dichtlippen, vorgesehen sind.

14. Einrichtung nach einem der Ansprüche 7 bis 13,
**dadurch gekennzeichnet,**
**dass** der Deckel in der Ruheposition mit einem Riegelelement verriegelt werden kann.

15. Einrichtung nach einem der Ansprüche 1 bis 14,
**dadurch gekennzeichnet,**
**dass** die verstellbar gelagerte Bildererfassungseinheit (01) und/oder der verstellbar gelagerte Deckel (09) durch Betätigung eines Schaltelements und/oder durch Einlegen des Rückwärtsganges derart angesteuert werden können, dass die Bildererfassungseinheit (01)
und/oder der Deckel (09) zwischen Ruheposition und Betriebsposition und umgekehrt verstellt werden.

16. Einrichtung nach einem der Ansprüche 1 bis 15,
**dadurch gekennzeichnet,**
**dass** der Bilderfassungseinheit (01) eine Beleuchtungseinrichtung (13) zugeordnet ist, mit der der Beobachtungsbereich außerhalb des Fahrzeuges zumindest teilweise ausleuchtbar ist.

17. Einrichtung nach einem der Ansprüche 1 bis 16,
**dadurch gekennzeichnet,**
**dass** das Schutzelement (07) von einem Teil der Fahrzeugkarosserie, insbesondere vom Kofferraumdeckel, gebildet wird.

18. Einrichtung nach einem der Ansprüche 1 bis 17,
**dadurch gekennzeichnet,**
**dass** die Bilddarstellungseinheit als Display ausgebildet ist, auf dem wahlweise auch Daten und/oder Bilder eines Navigationssystems anzeigbar sind.

19. Einrichtung nach einem der Ansprüche 1 bis 18,
**dadurch gekennzeichnet,**
**dass** die Bilderfassungseinheit an einer horizontal und/oder vertikal ausrichtbaren Justiereinrichtung gelagert ist.

## Claims

1. A parking and/or manoeuvring assistance device for a passenger vehicle or a commercial vehicle comprising an image acquisition unit (01), e.g., a video camera, and a graphic display unit with which the image information recorded by the image acquisition unit (01) can be displayed in the interior of the vehicle either with or without processing, the image acquisition unit (01) being situated behind a protective element (07) so that it is essentially inaccessible from the outside at least in a resting position, a recess (08) which is allocated to the image acquisition unit (01) being provided in the protective element (07), and the image acquisition unit (01) being adjustably mounted and being adjustable between the resting position and at least one operating position which is different from the former by means of a drive mechanism (05),
**characterized in that**
the drive mechanism is designed in the manner of a bimetal unit.

2. The device according to Claim 1,
**characterized in that**
the image acquisition unit (01) is situated on a carriage (03) which can be adjusted linearly relative to the protective element (07).

3. The device according to Claim 1 or 2,
**characterized in that**
the image acquisition unit (01) in at least one operating position extends at least a short distance through the recess (08) in the protective element (07).

4. The device according to one of Claims 1 through 3,
**characterized in that**
the recess is sealed with a transparent cover element, especially forming a space that is essentially closed to the outside.

5. The device according to Claim 4,
**characterized in that**
the cover element is heatable.

6. The device according to one of Claims 1 through 5,
**characterized in that**
the cover element is designed in the manner of a pane of glass, especially with a conductive coating.

7. The device according to one of Claims 1 through 6,
**characterized in that**
on the outside of the protective element (07) there is provided an adjustably mounted cover (09) which can be adjusted by means of the bimetal unit between a resting position, in which the recess (08) in the protective element (07) is essentially completely covered by the cover (09), and at least one operating position which is different from the former and in which the images of the observation area located outside the vehicle can be recorded through the recess by the image acquisition unit situated behind the protective element or in which the image acquisition unit (01) can extend through the recess (08) in the protective element (07) for at least a short distance.

8. The device according to Claim 7,
**characterized in that**
a common bimetal unit is used for driving the adjustably mounted image acquisition unit (01) and the adjustably mounted cover (09), its adjusting movements being transmitted by transmission elements (06, 12) connecting the cover (09) and the image acquisition unit (01) to the bimetal unit either together or separately from one another.

9. The device according to Claim 7 or 8,
**characterized in that**
the cover (09) is designed in the manner of a manufacturer's emblem or a nameplate.

10. The device according to one of Claims 7 through 9,
**characterized in that**
the cover (09) can be pivoted about a swivel axis (11) between the resting position and the operating position.

11. The device according to one of Claims 7 through 9,
**characterized in that**
the cover can be rotated in its plane about an axis of rotation between the resting position and the operating position, the axis of rotation being arranged eccentrically with respect to the centre of the cover and running essentially perpendicular to the plane of the cover.

12. The device according to one of Claims 7 through 11,
**characterized in that**
cleaning elements are provided on the side of the cover facing the image acquisition unit.

13. The device according to one of Claims 7 through 12,
**characterized in that**
sealing elements, especially sealing lips, are provided on the side of the cover facing the image acquisition unit.

14. The device according to one of Claims 7 through 13,
**characterized in that**
the cover can be locked in the resting position with a locking element.

15. The device according to one of Claims 1 through 14,
**characterized in that**
the adjustably mounted image acquisition unit (01) and/or the adjustably mounted cover (09) can be controlled by operation of a switching element and/or by putting the vehicle in reverse gear such that the image acquisition unit (01) and/or the cover (09) can be adjusted between the resting position and the operating position and vice versa.

16. The device according to one of Claims 1 through 15,
**characterized in that**
the image acquisition unit (01) is provided with a lighting device (13) with which the observation area outside the vehicle can be illuminated at least in part.

17. The device according to one of Claims 1 through 16,
**characterized in that**
the protective element (07) is formed by a part of the vehicle body, especially the boot lid.

18. The device according to one of Claims 1 through 17,
**characterized in that**
the graphic display unit is designed as a display on which data and/or images of a navigation system may optionally also be displayed.

19. The device according to one of Claims 1 through 18,
**characterized in that**
the image acquisition unit is mounted on an adjustment mechanism that is horizontally and/or vertically adjustable.

## Revendications

1. - Dispositif d'aide à la manoeuvre et/ou au stationnement d'un véhicule poids lourd ou léger comprenant une unité de prise d'images (01), par exemple une caméra vidéo et une unité de formation d'image, avec laquelle les informations d'image saisies par l'unité de prise d'image (01) peuvent être affichées de façon traitée et/ou non traitée dans l'espace intérieur du véhicule, dans lequel l'unité de prise d'images (01) est au moins dans une position de repos, disposée derrière un élément de protection (07) de façon à être sensiblement inaccessible, un évidement (08) correspondant à l'unité de prise d'image (01) étant prévu dans l'élément de protection (07) et l'unité de prise d'image (01) étant disposée de façon déplaçable au moyen d'un dispositif d'entraînement (05) entre la position de repos et au moins une position de service différente de cette dernière, **caractérisé en ce que** le dispositif d'entraînement est réalisé sous la forme d'une unité du type bimétal.

2. - Dispositif selon la revendication 1, **caractérisé en ce que** l'unité de prise d'images (01) est disposée sur un traîneau (03) qui peut être déplacé linéairement par rapport à l'élément de protection (07).

3. - Dispositif selon la revendication 1 ou 2, **caractérisé en ce que** dans au moins une position de service, l'unité de prise d'images (01) fait saillie au moins partiellement de l'évidement (08) de l'élément de protection (07).

4. - Dispositif selon l'une des revendications 1 à 3, **caractérisé en ce que** l'évidement réalisé en particulier par un espace sensiblement fermé vers l'extérieur, est obturé par un élément de couverture transparent.

5. - Dispositif selon la revendication 4, **caractérisé en ce que** l'élément de couverture peut être chauffé.

6. - Dispositif selon l'une des revendications 1 à 5, **caractérisé en ce que** l'élément de couverture est réalisé en particulier sous la forme d'une plaque en verre revêtue d'une couche conductrice.

7. **-** Dispositif selon l'une des revendications 1 à 6, **caractérisé en ce qu'**un couvercle (09) monté de façon mobile est prévu sur la face extérieure de l'élément de protection (07), ce couvercle étant déplaçable au moyen de l'unité de bimétal entre une position de repos dans laquelle l'évidement (08) de l'élément de protection (07) est sensiblement complètement recouvert par le couvercle (09) et au moins une position de service différente de cette dernière dans laquelle il est possible de prendre des images de la zone d'observation située à l'extérieur du véhicule au moyen de l'unité de prise d'images disposée derrière l'élément de protection à travers l'évidement ou dans laquelle l'unité de prise d'images (01) fait au moins saillie partiellement de l'évidement (08) de l'élément de protection (07).

8. - Dispositif selon la revendication 7, **caractérisé en ce que** pour l'entraînement de l'unité de prise d'images (01) montée de façon déplaçable et du couvercle (09) monté de façon mobile, une unité commune de bimétal est utilisée, dont les mouvements d'entraînement sont transmis par des éléments de transmission (06, 12) qui relient ensemble ou séparément le couvercle (09) et l'unité de prise d'images (01) à l'unité de bimétal.

9. - Dispositif selon la revendication 7 ou 8, **caractérisé en ce que** le couvercle (09) est réalisé sous forme d'un emblème de fabricant ou d'une étiquette de type.

10. **-** Dispositif selon l'une des revendications 7 à 9, **caractérisé en ce que** le couvercle (09) est monté pivotant autour d'un axe de pivotement (11) entre une position de repos et une position de service.

11. - Dispositif selon l'une des revendications 7 à 9, **caractérisé en ce que** le couvercle peut être pivoté dans le plan de son corps autour d'un axe de pivotement entre une position de repos et une position de service, l'axe de pivotement étant situé de façon excentrée par rapport au milieu du couvercle et s'étendant de façon sensiblement perpendiculaire au plan du corps du couvercle.

12. - Dispositif selon l'une de revendications 7 à 11, **caractérisé en** de que sur le côté du couvercle dirigé vers l'unité de prise d'images sont prévus des éléments de nettoyage.

13. **-** Dispositif selon l'une des revendications 7 à 12, **caractérisé en ce que** sur le côté du couvercle dirigé vers l'unité de prise d'images sont prévus des éléments d'étanchéité, en particulier des lèvres d'étanchéité.

14. - Dispositif selon l'une des revendications 7 à 13, **caractérisé en ce que** le couvercle peut être verrouillé dans sa position de repos par un élément de verrouillage.

15. - Dispositif selon l'une des revendications 1 à 14, **caractérisé en ce que** l'unité de prise d'images (01) montée de façon déplaçable et/ou le couvercle (09) monté de façon mobile peuvent être commandés par actionnement d'un élément de commutation et/ou par passage de la marche arrière de façon à déplacer l'unité de prise d'images (01) et/ou le couvercle (09) entre la position de repos et la position de service et inversement.

16. - Dispositif selon l'une des revendications 1 à 15, **caractérisé en ce qu'**un dispositif d'éclairage (13) est associé à l'unité de prise d'images (01) pour éclairer au moins partiellement la zone d'observation à l'extérieur du véhicule.

17. **-** Dispositif selon l'une des revendications 1 à 16, **caractérisé en ce que** l'élément de protection (07) est réalisé par une partie de la carrosserie du véhicule, en particulier par le couvercle du coffre.

18. **-** Dispositif selon l'une des revendications 1 à 17, **caractérisé en ce que** l'unité de formation d'image est réalisée sous la forme d'un écran d'affichage sur lequel peuvent également être affichées, au choix, des données et/ou des images d'un système de navigation.

19. - Dispositif selon l'une des revendications 1 à 18, **caractérisé en ce que** l'unité de prise d'images est montée sur un système d'ajustage pouvant être aligné horizontalement et/ou verticalement.
